# EUROPEAN PATENT APPLICATION

(11) **EP 4 787 257 A1**
(43) Date of publication of application: **05.08.2026**
(21) Application number: 26150062.3
(22) Date of filing: 02.01.2026
(51) Int. Cl.: G06Q 10/0635, G06Q 10/0637

(54) **SUSTAINABILITY ASSESSMENT TOOL**

(30) Priority: 24.01.2025 US 202519036322
(71) Applicant: The Boeing Company, Arlington, VA 22202 (US)
(72) Inventor: Mount, Victoria Estelle, Arlington, VA, 22202 (US); Bidivenciu, Irina Gabriela, Arlington, VA, 22202 (US); Eastland, Christopher Charles Michael, Arlington, VA, 22202 (US); Williams, Garrett Denard, Arlington, VA, 22202 (US); Ricci, Luke Stephen, Arlington, VA, 22202 (US)
(74) Representative: Hoffmann Eitle

(57) **Abstract**

A computer-implemented method for assessing sustainability impacts of an alternative option. The method includes accessing a sustainability assessment tool (190) which includes pre-defined templates (300, 400, 500) to guide users through structured sustainability questions. The method includes receiving input data (800, 900) for an alternative option related to a plurality of sustainability categories (804, 806, 808) and integrating the input data into a framework comprising a plurality of sustainability sub-categories. The method includes analyzing the input data (206) and identifying relative risks and benefits (1320, 1324) associated with the alternative option in comparison with a baseline option. The method includes generating comparative visual outputs (1300) to visually represent the relative sustainability risks and benefits (1320, 1324) of the alternative option.

## Description

### BACKGROUND INFORMATION

### 1. Field:

The present disclosure relates generally to assessment tools, and more specifically to a sustainability assessment tool designed to evaluate sustainability impacts of different options in product development and planning directives.

### 2. Background:

Sustainability has emerged as a critical focus in the development of products, processes, and technologies across various industries. As organizations strive to meet evolving environmental, social, and economic sustainability goals, decision-makers are faced with the challenge of evaluating the holistic sustainability impact of their projects and initiatives. Effective sustainability assessments are essential to align development efforts with organizational objectives and regulatory requirements.

Current methods for evaluating sustainability often rely on disparate tools that focus on specific aspects of sustainability, such as environmental emissions, community noise impacts, or workplace safety. While these tools provide valuable insights within their respective domains, they fail to offer a comprehensive view of sustainability across all three pillars: environmental, social, and economic. This fragmented approach leads to limited visibility into tradeoffs between these dimensions and hinders informed decision-making.

### SUMMARY

According to an illustrative embodiment, a computer-implemented method for assessing sustainability impacts of an alternative option is provided. The method includes accessing a sustainability assessment tool. The sustainability assessment tool includes pre-defined templates to guide users through structured sustainability questions. The method includes receiving input data for an alternative option related to a plurality of sustainability categories and integrating the input data into a framework comprising a plurality of sustainability sub-categories. The method includes analyzing the input data and identifying relative risks and benefits associated with the alternative option in comparison with a baseline option and generating comparative visual outputs to visually represent the relative sustainability risks and benefits of the alternative option.

In an illustrative embodiment, the plurality of sustainability categories comprises environmental, social, and economic sustainability categories. The alternative option comprises new technologies, new manufacturing, new engineering processes, or new planning directives. The baseline option comprises existing technologies, existing manufacturing processes, existing engineering processes or existing planning directives.

In an illustrative embodiment, the comparative visual outputs are displayed using the sustainability assessment tool. The comparative visual outputs include charts and graphs to visually represent the relative sustainability risks and benefits of the alternative option.

In an illustrative embodiment, the visual outputs include stoplight charts or comparative bar graphs to communicate sustainability risks and benefits of the alternative option.

In an illustrative embodiment, the sustainability assessment tool is linked with external databases to import data relevant to the environmental, social, and economic categories.

In other embodiments, a computer system and a computer program product for assessing sustainability impacts of an alternative option are provided.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
FIG. 1 is a pictorial representation of a computing environment in which illustrative embodiments may be implemented;
FIG. 2 illustrates a block diagram of a sustainability assessment tool in accordance with an illustrative embodiment;
FIGS. 3A and 3B illustrate a structured template for a first level sustainability assessment in accordance with an illustrative embodiment;
FIGS. 4A, 4B, 4C, 5A, 5B, 5C, 6A, 6B and 7 illustrate structured templates for a second level sustainability assessment in accordance with illustrative embodiments;
FIGS. 8A, 8B, 9A, 9B, 9C, 9D, 10A, 10B, 10C, 11A, 11B, 11C and 12 illustrate completed structured templates for a sustainability assessment in accordance with illustrative embodiments; and
FIG. 13 illustrates a table generated by a visualization module.

### DETAILED DESCRIPTION

The present disclosure relates to a sustainability assessment tool designed for sustainability assessments, specifically enabling organizations to evaluate and compare the sustainability impacts of different options in product development and planning directives. The sustainability assessment tool integrates various considerations including environmental, social, and economic considerations into a single framework for informed decision-making.

Various aspects of the present disclosure are described by narrative text, flowcharts, block diagrams of computer systems and/or block diagrams of the machine logic included in computer program product (CPP) embodiments. With respect to any processes, depending upon the technology involved, the operations can be performed in a different order than what is shown in a given figure. For example, again depending upon the technology involved, two operations shown may be performed in reverse order, as a single integrated step, concurrently, or in a manner at least partially overlapping in time.

A computer program product embodiment ("CPP embodiment" or "CPP") is a term used in the present disclosure to describe any set of one or more storage media (also called "mediums") collectively included in a set of one or more storage devices that collectively include machine readable code corresponding to instructions and/or data for performing computer operations specified in a given CPP claim. A "storage device" is any tangible device that can retain and store instructions for use by a computer processor. Without limitation, the computer-readable storage medium may be an electronic storage medium, a magnetic storage medium, an optical storage medium, an electromagnetic storage medium, a semiconductor storage medium, a mechanical storage medium, or any suitable combination of the foregoing. Some known types of storage devices that include these mediums include: diskette, hard disk, random access memory (RAM), read-only memory (ROM), erasable programmable read-only memory (EPROM or Flash memory), static random access memory (SRAM), compact disc read-only memory (CD-ROM), digital versatile disk (DVD), memory stick, floppy disk, mechanically encoded device (such as punch cards or pits / lands formed in a major surface of a disc) or any suitable combination of the foregoing. A computer-readable storage medium, as that term is used in the present disclosure, is not to be construed as storage in the form of transitory signals per se, such as radio waves or other freely propagating electromagnetic waves, electromagnetic waves propagating through a waveguide, light pulses passing through a fiber optic cable, electrical signals communicated through a wire, and/or other transmission media. As will be understood by those of skill in the art, data is typically moved at some occasional points in time during normal operations of a storage device, such as during access, de-fragmentation, or garbage collection, but this does not render the storage device as transitory because the data is not transitory while it is stored.

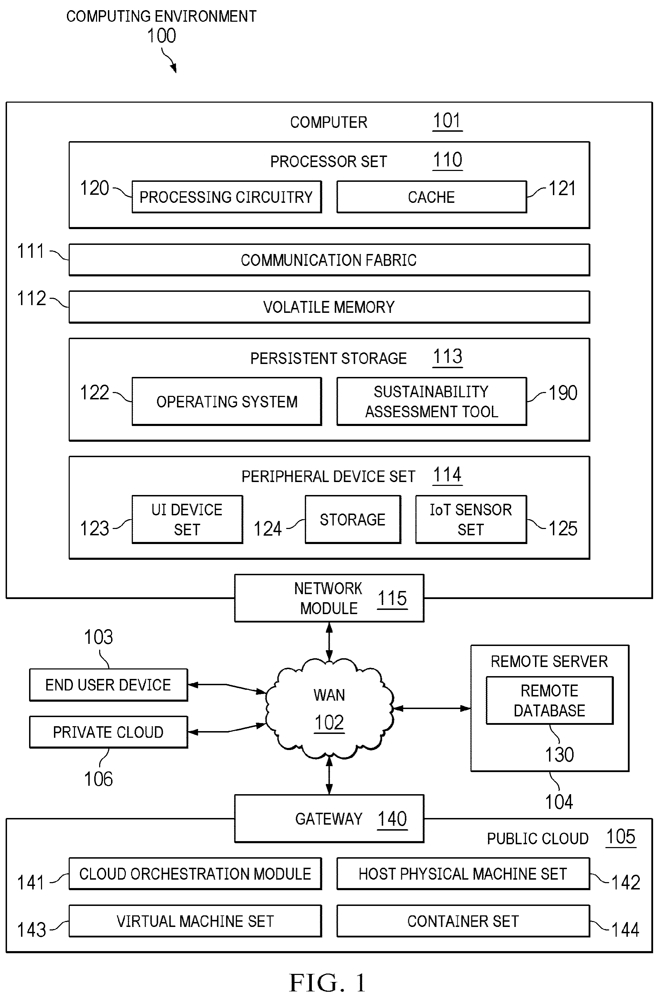

With reference now to the figures, and in particular with reference to FIG. 1, a block diagram of a computing environment is depicted in accordance with an illustrative embodiment. Computing environment 100 contains an example of an environment for the execution of at least some of the computer code involved in performing the inventive methods, such as sustainability assessment tool 190. In an illustrative embodiment, sustainability assessment tool 190 is a software solution implemented in a spreadsheet platform (e.g., Microsoft Excel or equivalent platform).

In addition to sustainability assessment tool 190, computing environment 100 includes, for example, computer 101, wide area network (WAN) 102, end user device (EUD) 103, remote server 104, public cloud 105, and private cloud 106. In this embodiment, computer 101 includes processor set 110 (including processing circuitry 120 and cache 121), communication fabric 111, volatile memory 112, persistent storage 113 (including operating system 122 and sustainability assessment tool 190, as identified above), peripheral device set 114 (including user interface (UI) device set 123, storage 124, and Internet of Things (IoT) sensor set 125), and network module 115. Remote server 104 includes remote database 130. Public cloud 105 includes gateway 140, cloud orchestration module 141, host physical machine set 142, virtual machine set 143, and container set 144.

Computer 101 may take the form of a desktop computer, laptop computer, tablet computer, smart phone, smart watch or other wearable computer, mainframe computer, quantum computer or any other form of computer or mobile device now known or to be developed in the future that is capable of running a program, accessing a network, or querying a database such as remote database 130. As is well understood in the art of computer technology, and depending upon the technology, performance of a computer-implemented method may be distributed among multiple computers and/or between multiple locations. On the other hand, in this presentation of computing environment 100, detailed discussion is focused on a single computer, specifically computer 101, to keep the presentation as simple as possible. Computer 101 may be located in a cloud, even though it is not shown in a cloud in FIG. 1. On the other hand, computer 101 is not required to be in a cloud except to any extent as may be affirmatively indicated.

Processor set 110 includes one or more computer processors of any type now known or to be developed in the future. Processing circuitry 120 may be distributed over multiple packages, for example, multiple coordinated integrated circuit chips. Processing circuitry 120 may implement multiple processor threads and/or multiple processor cores. Cache 121 is memory that is located in the processor chip package(s) and is typically used for data or code that should be available for rapid access by the threads or cores running on processor set 110. Cache memories are typically organized into multiple levels depending upon relative proximity to the processing circuitry. Alternatively, some, or all, of the cache for the processor set may be located "off chip." In some computing environments, processor set 110 may be designed for working with qubits and performing quantum computing.

Computer-readable program instructions are typically loaded onto computer 101 to cause a series of operational steps to be performed by processor set 110 of computer 101 and thereby effect a computer-implemented method, such that the instructions thus executed will instantiate the methods specified in flowcharts and/or narrative descriptions of computer-implemented methods included in this document (collectively referred to as "the inventive methods"). These computer-readable program instructions are stored in various types of computer-readable storage media, such as cache 121 and the other storage media discussed below. The program instructions and associated data are accessed by processor set 110 to control and direct performance of the inventive methods. In computing environment 100, at least some of the instructions for performing the inventive methods may be stored in sustainability assessment tool 190 in persistent storage 113.

Communication fabric 111 is the signal conduction path that allows the various components of computer 101 to communicate with each other. Typically, this fabric is made of switches and electrically conductive paths, such as the switches and electrically conductive paths that make up buses, bridges, physical input/output ports and the like. Other types of signal communication paths may be used, such as fiber optic communication paths and/or wireless communication paths.

Volatile memory 112 is any type of volatile memory now known or to be developed in the future. Examples include dynamic type random access memory (RAM) or static type RAM. Typically, volatile memory 112 is characterized by random access, but this is not required unless affirmatively indicated. In computer 101, volatile memory 112 is located in a single package and is internal to computer 101, but, alternatively or additionally, volatile memory 112 may be distributed over multiple packages and/or located externally with respect to computer 101.

Persistent storage 113 is any form of nonvolatile storage for computers that is now known or to be developed in the future. The non-volatility of this storage means that the stored data is maintained regardless of whether power is being supplied to computer 101 and/or directly to persistent storage 113. Persistent storage 113 may be a read only memory (ROM), but typically at least a portion of the persistent storage allows writing of data, deletion of data, and rewriting of data. Some familiar forms of persistent storage include magnetic disks and solid state storage devices. Operating system 122 may take several forms, such as various known proprietary operating systems or open source Portable Operating System Interface-type operating systems that employ a kernel. The code included in sustainability assessment tool 190 typically includes at least some of the computer code involved in performing the inventive methods.

Peripheral device set 114 includes the set of peripheral devices of computer 101. Data communication connections between the peripheral devices and the other components of computer 101 may be implemented in various ways, such as Bluetooth connections, Near-Field Communication (NFC) connections, connections made by cables (such as universal serial bus (USB) type cables), insertion-type connections (for example, secure digital (SD) card), connections made through local area communication networks and even connections made through wide area networks such as the internet. In various embodiments, UI device set 123 may include components such as a display screen, speaker, microphone, wearable devices (such as goggles and smart watches), keyboard, mouse, printer, touchpad, game controllers, and haptic devices. Storage 124 is external storage, such as an external hard drive, or insertable storage, such as an SD card. Storage 124 may be persistent and/or volatile. In some embodiments, storage 124 may take the form of a quantum computing storage device for storing data in the form of qubits. In embodiments where computer 101 is required to have a large amount of storage (for example, where computer 101 locally stores and manages a large database) then this storage may be provided by peripheral storage devices designed for storing very large amounts of data, such as a storage area network (SAN) that is shared by multiple geographically distributed computers. IoT sensor set 125 is made up of sensors that can be used in Internet of Things applications. For example, one sensor may be a thermometer and another sensor may be a motion detector.

Network module 115 is the collection of computer software, hardware, and firmware that allows computer 101 to communicate with other computers through WAN 102. Network module 115 may include hardware, such as modems or Wi-Fi signal transceivers, software for packetizing and/or de-packetizing data for communication network transmission, and/or web browser software for communicating data over the internet. In some embodiments, network control functions and network forwarding functions of network module 115 are performed on the same physical hardware device. In other embodiments (for example, embodiments that utilize software-defined networking (SDN)), the control functions and the forwarding functions of network module 115 are performed on physically separate devices, such that the control functions manage several different network hardware devices. Computer-readable program instructions for performing the inventive methods can typically be downloaded to computer 101 from an external computer or external storage device through a network adapter card or network interface included in network module 115.

WAN 102 is any wide area network (for example, the internet) capable of communicating computer data over non-local distances by any technology for communicating computer data, now known or to be developed in the future. In some embodiments, the WAN 102 may be replaced and/or supplemented by local area networks (LANs) designed to communicate data between devices located in a local area, such as a Wi-Fi network. The WAN and/or LANs typically include computer hardware such as copper transmission cables, optical transmission fibers, wireless transmission, routers, firewalls, switches, gateway computers, and edge servers.

End User Device (EUD) 103 is any computer system that is used and controlled by an end user (for example, a customer of an enterprise that operates computer 101) and may take any of the forms discussed above in connection with computer 101. EUD 103 typically receives helpful and useful data from the operations of computer 101. For example, in a hypothetical case where computer 101 is designed to provide a recommendation to an end user, this recommendation would typically be communicated from network module 115 of computer 101 through WAN 102 to EUD 103. In this way, EUD 103 can display, or otherwise present, the recommendation to an end user. In some embodiments, EUD 103 may be a client device, such as a thin client, heavy client, mainframe computer, desktop computer, and so on.

Remote server 104 is any computer system that serves at least some data and/or functionality to computer 101. Remote server 104 may be controlled and used by the same entity that operates computer 101. Remote server 104 represents the machine(s) that collect and store helpful and useful data for use by other computers, such as computer 101. For example, in a hypothetical case where computer 101 is designed and programmed to provide a recommendation based on historical data, then this historical data may be provided to computer 101 from remote database 130 of remote server 104.

Public cloud 105 is any computer system available for use by multiple entities that provides on-demand availability of computer system resources and/or other computer capabilities, especially data storage (cloud storage) and computing power, without direct active management by the user. Cloud computing typically leverages sharing of resources to achieve coherence and economies of scale. The direct and active management of the computing resources of public cloud 105 is performed by the computer hardware and/or software of cloud orchestration module 141. The computing resources provided by public cloud 105 are typically implemented by virtual computing environments that run on various computers making up the computers of host physical machine set 142, which is the universe of physical computers in and/or available to public cloud 105. The virtual computing environments (VCEs) typically take the form of virtual machines from virtual machine set 143 and/or containers from container set 144. It is understood that these VCEs may be stored as images and may be transferred among and between the various physical machine hosts, either as images or after instantiation of the VCE. Cloud orchestration module 141 manages the transfer and storage of images, deploys new instantiations of VCEs and manages active instantiations of VCE deployments. Gateway 140 is the collection of computer software, hardware, and firmware that allows public cloud 105 to communicate through WAN 102.

Some further explanation of virtualized computing environments (VCEs) will now be provided. VCEs can be stored as "images." A new active instance of the VCE can be instantiated from the image. Two familiar types of VCEs are virtual machines and containers. A container is a VCE that uses operating-system-level virtualization. This refers to an operating system feature in which the kernel allows the existence of multiple isolated user-space instances, called containers. These isolated user-space instances typically behave as real computers from the point of view of programs running in them. A computer program running on an ordinary operating system can utilize all resources of that computer, such as connected devices, files and folders, network shares, CPU power, and quantifiable hardware capabilities. However, programs running inside a container can only use the contents of the container and devices assigned to the container, a feature which is known as containerization.

Private cloud 106 is similar to public cloud 105, except that the computing resources are only available for use by a single enterprise. While private cloud 106 is depicted as being in communication with WAN 102, in other embodiments a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data application portability between the multiple constituent clouds. In this embodiment, public cloud 105 and private cloud 106 are both part of a larger hybrid cloud.

Cloud Computing Services and/or Microservices: Public cloud 105 and private cloud 106 are programmed and configured to deliver cloud computing services and/or microservices (not separately shown in FIG. 1). Unless otherwise indicated, the word "microservices" shall be interpreted as inclusive of larger "services" regardless of size. Cloud services are infrastructure, platforms, or software that are typically hosted by third-party providers and made available to users through the internet. Cloud services facilitate the flow of user data from front-end clients (for example, user-side servers, tablets, desktops, laptops), through the internet, to the provider's systems, and back. In some embodiments, cloud services may be configured and orchestrated according to an "as a service" technology paradigm where something is being presented to an internal or external customer in the form of a cloud computing service. As-a-Service offerings typically provide endpoints with which various customers interface. These endpoints are typically based on a set of APIs. One category of as-a-service offering is Platform as a Service (PaaS), where a service provider provisions, instantiates, runs, and manages a modular bundle of code that customers can use to instantiate a computing platform and one or more applications, without the complexity of building and maintaining the infrastructure typically associated with these things. Another category is Software as a Service (SaaS) where software is centrally hosted and allocated on a subscription basis. SaaS is also known as on-demand software, web-based software, or web-hosted software. Four technological sub-fields involved in cloud services are: deployment, integration, on demand, and virtual private networks.

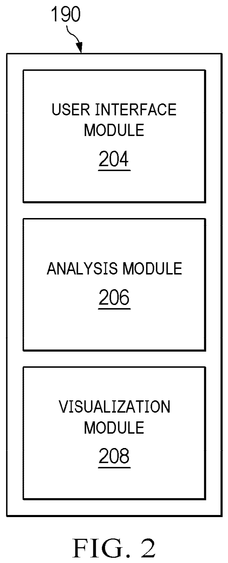

FIG. 2 illustrates a block diagram of sustainability assessment tool 190 in accordance with an illustrative embodiment. Sustainability assessment tool 190 includes user interface module 204 which provides a user-friendly interface, allowing users to input data related to an alternative option (e.g., new product, new process or new directive) through structured templates. These structured templates are preconfigured with questions and forms that correspond to a plurality of sustainability categories. The interface is designed to guide users systematically through the data entry process.

Sustainability assessment tool 190 includes analysis module 206, which integrates user input into a unified sustainability framework. Analysis module 206 evaluates and processes the input data across the sustainability categories, enabling the identification of risks, benefits, and tradeoffs of the alternative option in comparison with a baseline or reference option (e.g., existing product, existing process or existing directive).

Sustainability assessment tool 190 includes visualization module 208 which generates comparative visual outputs. The comparative visual outputs help illustrate the comparison between baseline and alternative options in terms of sustainability risks and benefits. The comparative visual outputs may include charts, graphs, tables, or other visual representations of data that aid in understanding and decision-making.

In an illustrative embodiment, user interface module 204 provides structured templates for receiving input data related to an alternative option (e.g., new product, new process or new directive) for assessments at different stages of their development lifecycle. In one embodiment, input data is received for two distinct levels of assessment: a first level sustainability assessment and a second level sustainability assessment.

The first level sustainability assessment can be conducted at the initial stage or the beginning of the development of the alternative option. This assessment serves as a preliminary evaluation to identify key sustainability considerations and potential impacts early in the development process. The first level sustainability assessment is intended to provide an overview of the environmental, social, and economic factors associated with the alternative option and guide decision-making to ensure sustainability is integrated from the start. The first level sustainability assessment focuses on broad categories and employs simplified evaluation criteria, making it a quick and accessible tool for early-stage planning.

The second level sustainability assessment is designed for an alternative option that is in an advanced or late stage of development. This assessment builds upon the foundation established by the first level assessment but delves into greater detail. It is suitable for evaluating the comprehensive sustainability performance of a mature alternative option. The second level sustainability assessment conducts in-depth analyses of environmental, social, and economic impacts using detailed metrics and data. The second level sustainability assessment includes all the categories covered in the first level assessment but incorporates more detailed criteria, methodologies, and data requirements. This ensures a thorough evaluation of sustainability aspects.

If an alternative option is already in an advanced or late development stage, users have the option to skip the first level sustainability assessment and proceed directly to the second level sustainability assessment. This flexibility is designed to streamline the assessment process for late-stage projects.

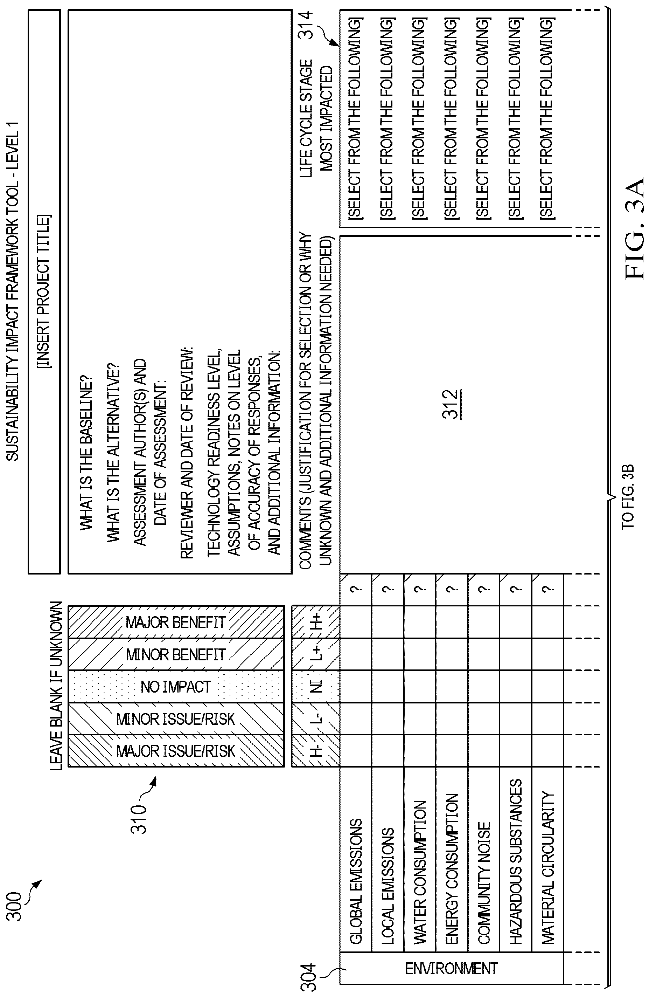

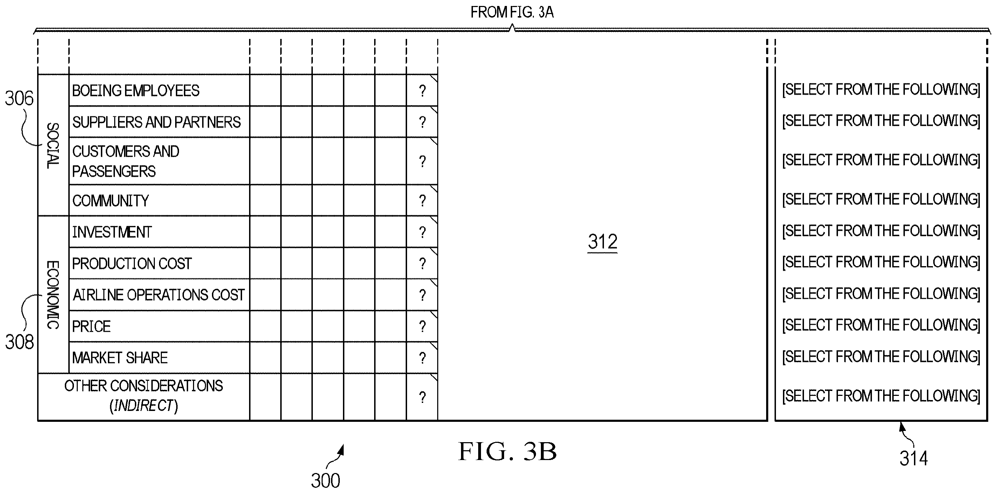

FIGS.3A and 3B illustrate structured template 300 which allows users to input data for a first level sustainability assessment. Structured template 300 consists of pre-defined forms organized into three main sustainability categories: (1) environmental sustainability 304; (2) social sustainability 306; and (3) economic sustainability 308. Each main category is further divided into multiple sub-categories, allowing detailed assessments. Structured template 300 includes fields for selecting predefined options, adding comments, and specifying life cycle stages.

In the illustrative embodiment, environmental sustainability 304 is divided into six sub-categories:
(1) Global Emissions: Greenhouse gas emissions that contribute to climate change, including but not limited to CO₂, CH₄, N₂O, contrails (e.g., condensation trails or line shaped clouds visible behind aircrafts that are composed of ice particles).
(2) Local Emissions: Local air pollutants that degrade local air quality, including but not limited to CO, NO₂, SO₂, O₃, Particulate Matter (PM).
(3) Water Consumption: Water consumed during any life cycle stage.
(4) Energy Consumption: Energy consumed during any life cycle stage.
(5) Community Noise: Any noise that an aircraft creates in the community, usually around an airport.
(6) Hazardous Substances: Substances that are regulated due to human safety concerns or adverse environmental impacts.
(7) Material Circularity: The minimization of waste and maximization of resource use by keeping products, materials, and resources in circulation for as long as possible at the highest value.

For each sub-category, users select one of five predefined options 310:
(1) Major Risks.
(2) Minor Risks.
(3) No Impact.
(4) Minor Benefits.
(5) Major Benefits.

The selection of an option depends on the degree of impact (positive, neutral, or negative) and its significance. For example, if the alternative option offers significant reductions in global emissions, users select Major Benefits and provide comments or justifications (e.g., specific emission reduction metric) in comment field 312. Conversely, if the alternative option significantly increases global emissions, users select Major Risks and explain the potential negative impact in comment field 312.

In the illustrative embodiment, users are required to specify which life cycle stage is most impacted by their selection in life cycle stage field 314. Life cycle stage 314 may include:
Material Extraction: Refers to the phase when withdrawal of materials (including minerals, ore, biomass, etc.) from the earth occur.

Manufacturing: Refers to the industrial production of goods.

In Use: Refers to the operational phase of the product, beginning at the time manufacturing is complete and ending at the time the product reaches the end of its useful life.

End of Life: Refers to the phase when the product transitions from useful life to disposal.

In the illustrative embodiment, social sustainability category evaluates the human health, safety and well-being of stakeholders across four sub-categories:
(1) Company Employees: Considers employee health, safety and wellbeing and is defined as any employee that takes part in developing, building, testing, or maintaining the product..
(2) Suppliers and Partners: Examines the health, safety and wellbeing of people involved in the supply chain and is defined as suppliers, partners and their employees that support the development, fabrication, assembly, delivery, maintenance, use or disposal of the product.
(3) Customers & Passengers: Evaluates the impact of the product or service on customer health, safety and wellbeing and is defined as entities or individuals that buy and operate the product or otherwise use the product.
(4) Community: Assesses impacts to the health, safety or wellbeing of local communities which are defined as people near manufacturing facilities, operational facilities or disposal centers.

For each sub-category under social sustainability category, users select one of the five predefined options (Major Risks, Minor Risks, No Impact, Minor Benefits, Major Benefits). Users add comments to justify the selection. Users specify the life cycle stage most impacted in life cycle field 314:

Material Extraction: Refers to the phase when withdrawal of materials (including minerals, ore, biomass, etc.) from the Earth occurs.

Manufacturing: Refers to the industrial production of goods.

In Use: Refers to the operational phase of the product, beginning once manufacturing is complete and ending once the product reaches the end of its useful life.

End of Life: Refers to the phase when the product transitions from useful life to disposal.

In the illustrative embodiment, economic sustainability 308 category of the sustainability assessment tool evaluates the financial impact of an alternative option. It is divided into the following sub-categories, each addressing a critical aspect of economic evaluation:
(1) Investment: This sub-category assesses the initial investment required for implementing the alternative option. It considers expenses such as research and development (e.g., engineering, testing, certification, etc.), infrastructure setup, equipment purchase, initial resource allocation and employee training and development. The goal is to determine the feasibility of the investment relative to the expected benefits.
(2) Production Cost: This sub-category evaluates the costs associated with producing goods or services using the alternative option. It includes raw material costs, labor expenses (including engineering, manufacturing, etc.), supply chain management, overhead expenses, and energy consumption during production. The analysis aims to ensure cost-efficiency and competitive pricing.
(3) Operation Cost: Operation costs cover the ongoing expenses required to maintain and operate the product or process. This includes maintenance, utilities, employee wages, and other recurring expenses. The sub-category focuses on long-term financial sustainability.
(4) Price: This sub-category examines the potential pricing strategy for the product or service derived from the alternative option. It evaluates how the price aligns with market expectations and profitability goals while considering customer affordability.
(5) Market Share: This sub-category analyzes the potential market share that the product or service can capture. It assesses competition, customer demand, and market trends to estimate the economic viability of the alternative option.

For each sub-category under economic sustainability 308 category, users select one of the five predefined options (Major Risks, Minor Risks, No Impact, Minor Benefits, Major Benefits). Users add comments to justify their selection. Users specify the life cycle stage most impacted in life cycle field 314.

In other embodiments additional categories or other considerations (e.g., indirect) can be included in the assessment.

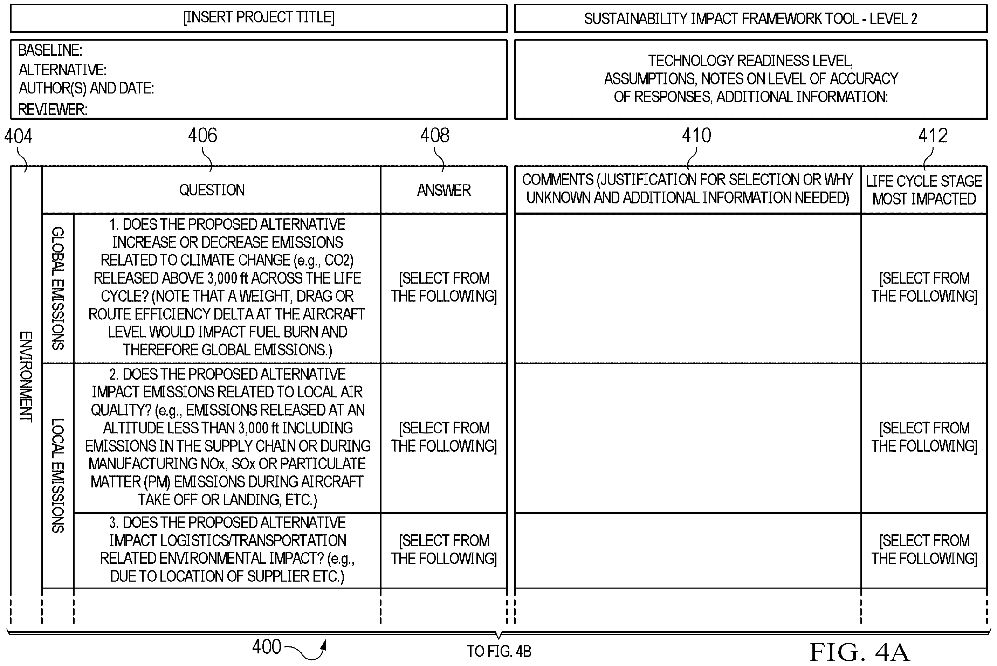

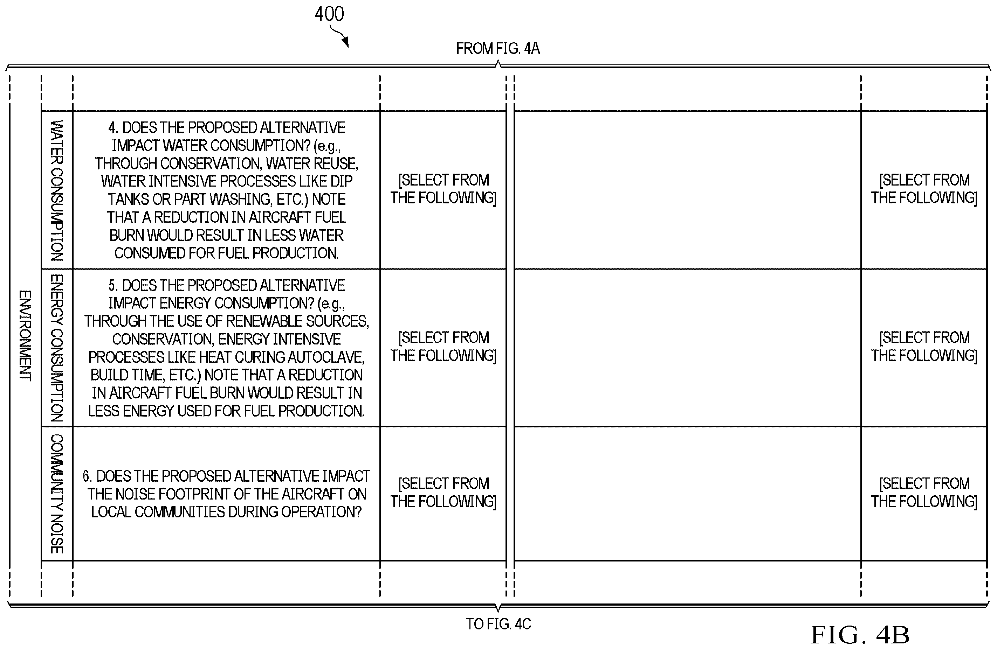

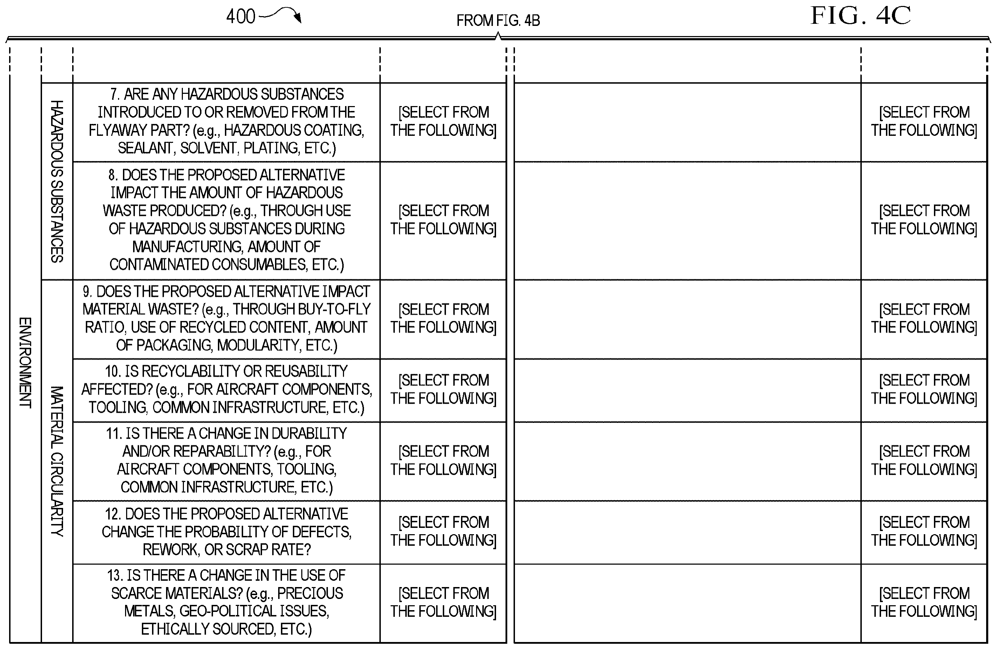

FIGS. 4A, 4B and 4C illustrate structured template 400, which consists of pre-defined forms designed to enable users to input data for conducting a second-level sustainability assessment under the environmental sustainability category.

In the illustrative embodiment, the environmental sustainability 404 category is divided into six sub-categories, each targeting a specific aspect of environmental impact:
Structured template 400 features pre-configured forms that are tailored for this purpose. These forms include:
Pre-configured Questions 406: Each sub-category is equipped with pre-defined questions that guide users through the assessment process. These questions ensure consistency in data collection and evaluation.

Pre-configured Answers 408: Users are provided with multiple pre-defined answer choices for each question. This facilitates streamlined data input and ensures uniformity across assessments.

Comment Fields 410: For each selected answer, users are prompted to provide detailed explanations in designated comment fields. This ensures that all responses are transparent, justified, and traceable.

Life Cycle Stages 412: To enhance the granularity of the analysis, users are required to specify the life cycle stage that is most affected by the alternative option (e.g., material extraction, manufacturing, in use, and end-of-life). This allows for a targeted and stage-specific evaluation.

By leveraging this structured template, the second-level sustainability assessment ensures a thorough and systematic analysis of environmental impacts, enabling users to make informed decisions about the sustainability of the alternative option.

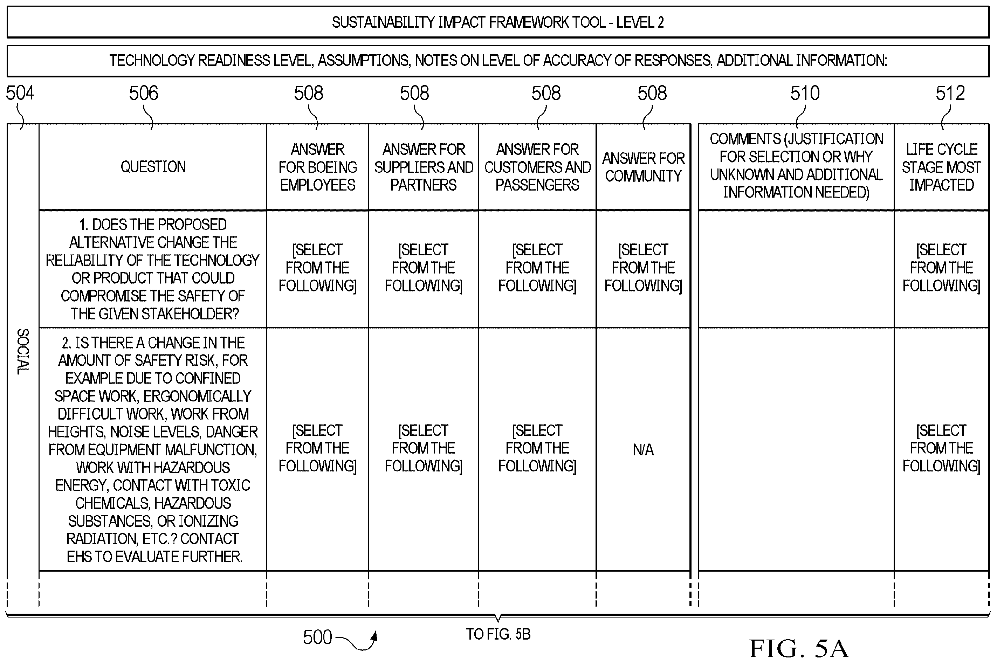

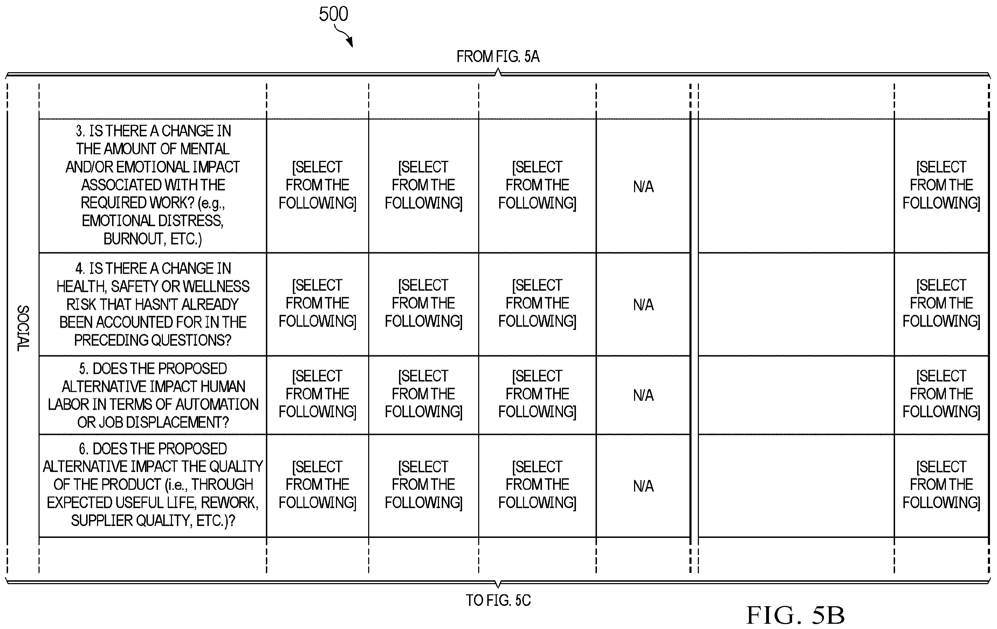

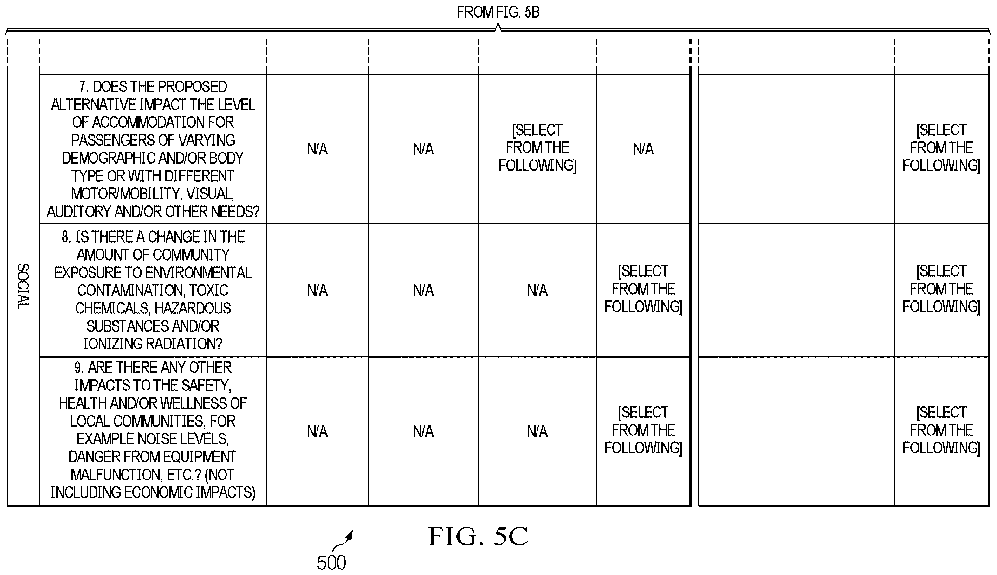

FIGS. 5A, 5B and 5C illustrate structured template 500, which consists of pre-defined forms designed to enable users to input data for conducting a second-level sustainability assessment under the social sustainability category. In the illustrative embodiment, social sustainability 504 category features pre-configured forms which include:
Pre-configured Questions 506: The pre-defined questions guide users through the assessment process. These questions ensure consistency in data collection and evaluation.

Pre-configured Answers 508: For each sub-category, users are provided with multiple pre-defined answer choices for each question. This facilitates streamlined data input and ensures uniformity across assessments.

Comment Fields 510: For each selected answer, users are prompted to provide detailed explanations in designated comment fields. This ensures that all responses are transparent, justified, and traceable.

Life Cycle Stages 512: To enhance the granularity of the analysis, users are required to specify the life cycle stage that is most affected by the alternative option (e.g., material extraction, manufacturing, in use, and end-of-life). This allows for a targeted and stage-specific evaluation.

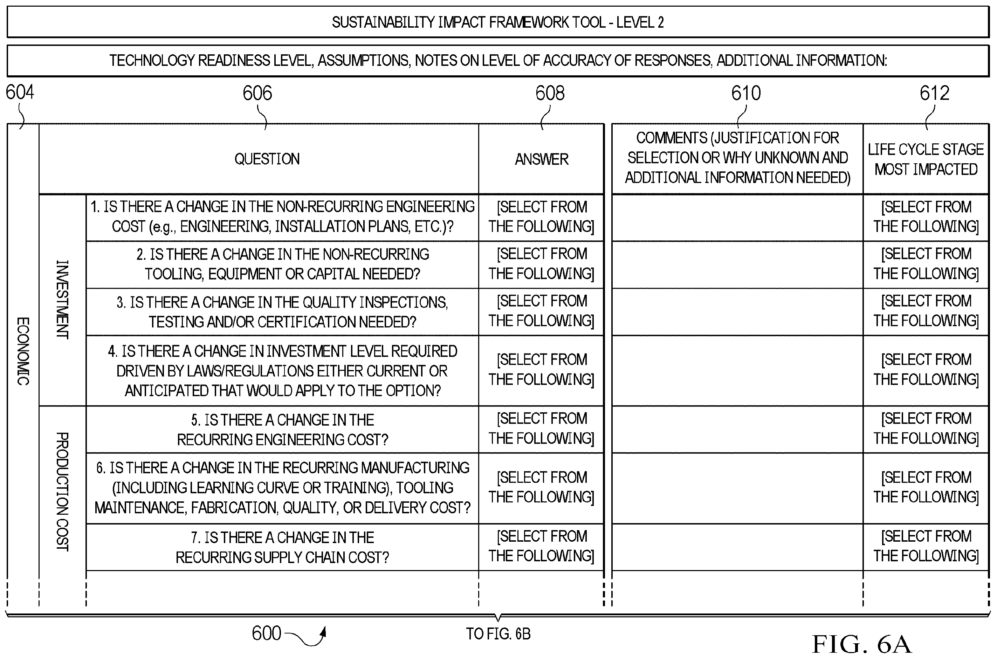

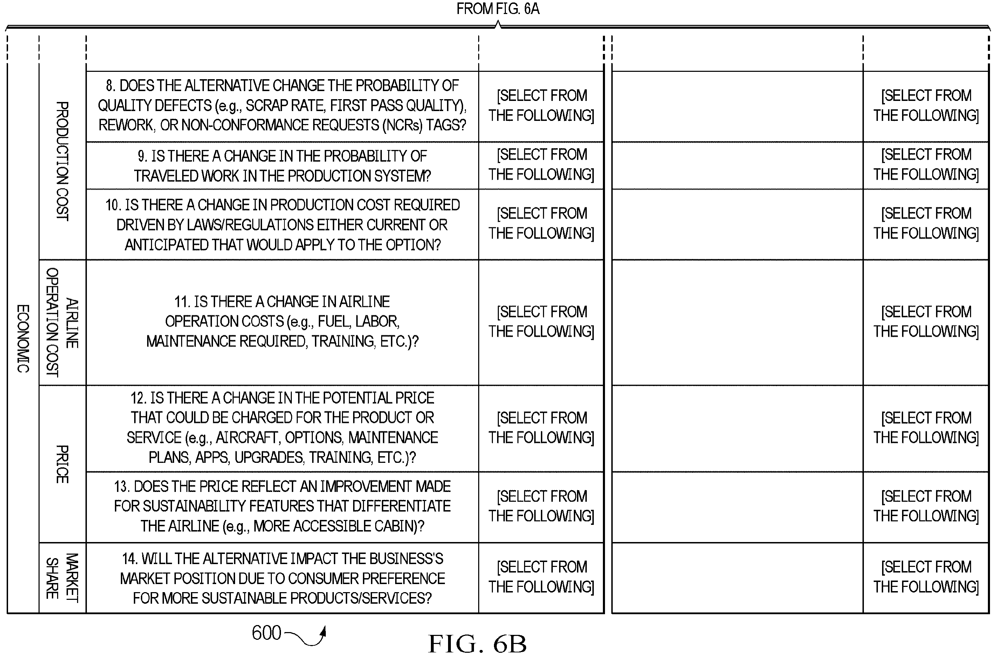

FIGS. 6A and 6B illustrate structured template 600, which consists of pre-defined forms designed to enable users to input data for conducting a second-level sustainability assessment under the economic sustainability category. In the illustrative embodiment, economic sustainability 604 category features pre-configured forms which include:
Pre-configured Questions 606: The pre-defined questions guide users through the assessment process. These questions ensure consistency in data collection and evaluation.

Pre-configured Answers 608: For each sub-category, users are provided with multiple pre-defined answer choices for each question. This facilitates streamlined data input and ensures uniformity across assessments.

Comment Fields 610: For each selected answer, users are prompted to provide detailed explanations in designated comment fields. This ensures that all responses are transparent, justified, and traceable.

Life Cycle Stages 612: To enhance the granularity of the analysis, users are required to specify the life cycle stage that is most affected by the alternative option (e.g., material extraction, manufacturing, in use, and end-of-life).

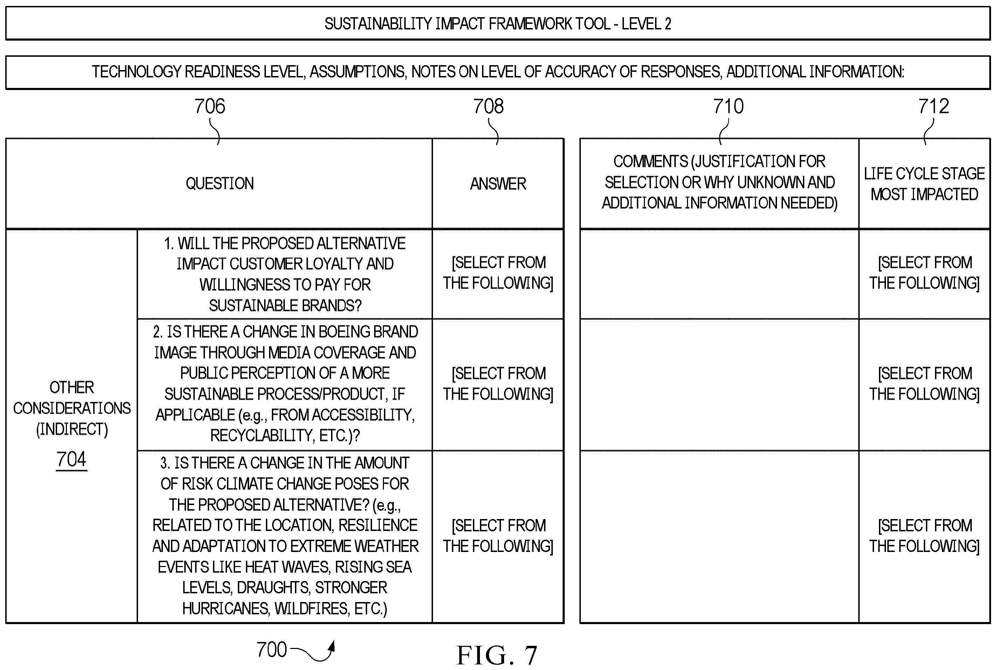

FIG. 7 illustrates structured template 700, which consists of pre-defined forms designed to enable users to input data for conducting a second-level sustainability assessment under other considerations categories. In the illustrative embodiment, other considerations category 704 features pre-configured forms which include:
Pre-configured Questions 706: The pre-defined questions guide users through the assessment process. These questions ensure consistency in data collection and evaluation.

Pre-configured Answers 708: For each sub-category, users are provided with multiple pre-defined answer choices for each question. This facilitates streamlined data input and ensures uniformity across assessments.

Comment Fields 710: For each selected answer, users are prompted to provide detailed explanations in designated comment fields. This ensures that all responses are transparent, justified, and traceable.

Life Cycle Stages 712: To enhance the granularity of the analysis, users are required to specify the life cycle stage that is most affected by the alternative option (e.g., material extraction, manufacturing, in use, and end-of-life).

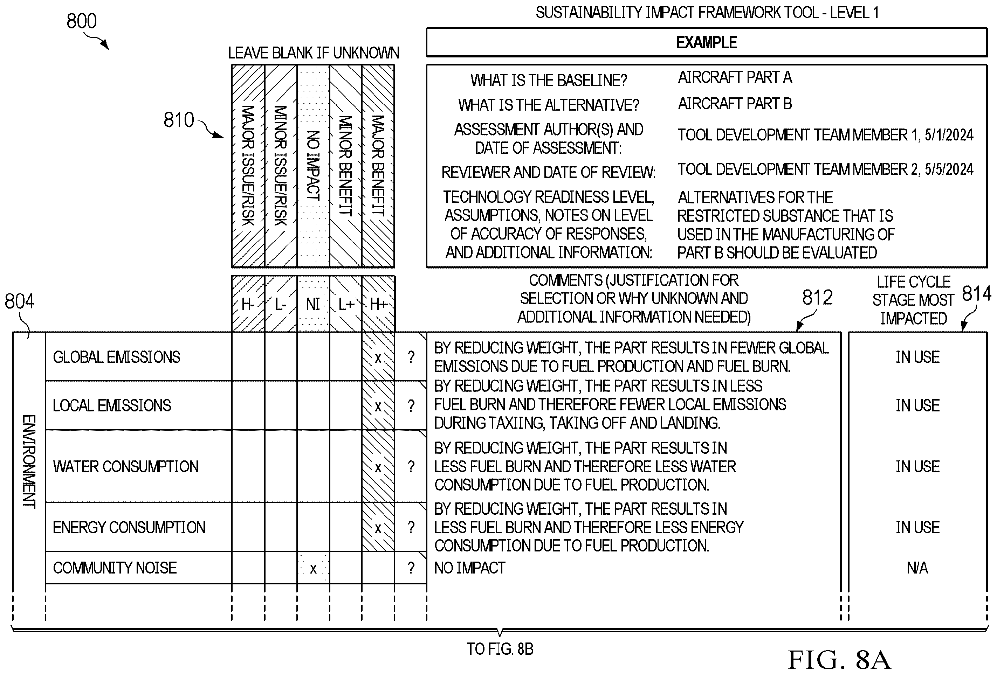

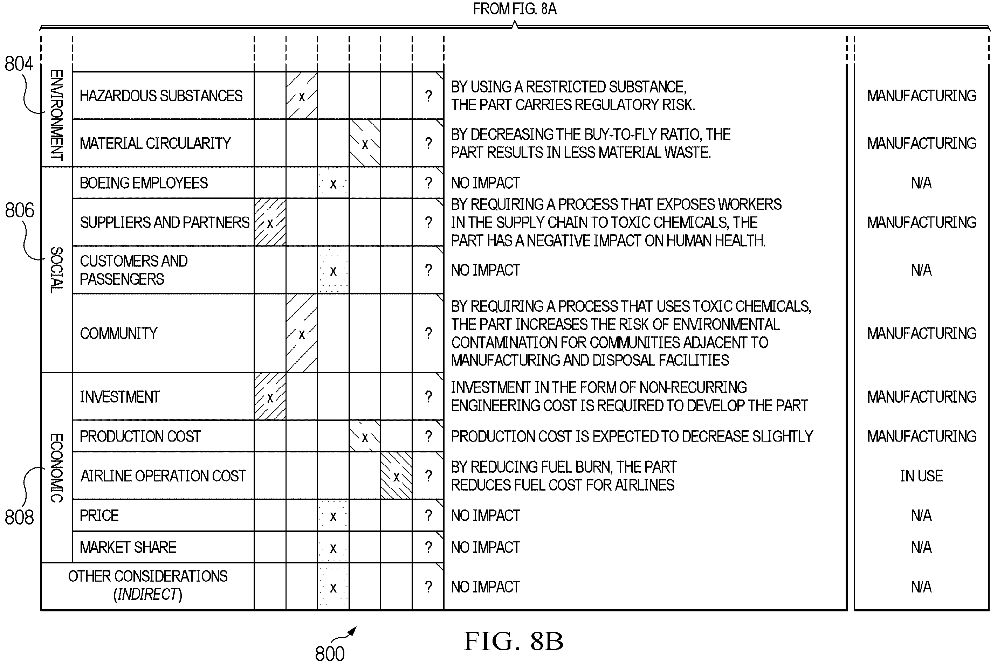

FIGS. 8A and 8B illustrate structured template 800 which has been completed by a user by inputting data for a first level sustainability assessment. In the illustrative embodiment, structured template 800 consists of pre-defined forms organized into three main sustainability categories: (1) environmental sustainability 804; (2) social sustainability 806; and (3) economic sustainability 808. Other categories or additional considerations may be included in the assessment. Each main category is further divided into multiple sub-categories.

For each sub-category, a user selected one of the five predefined options 810 (Major Risks, Minor Risks, No Impact, Minor Benefits, Major Benefits). The user added comments in comment field 812 to justify the selection. The user specified the life cycle stage most impacted in life cycle field 814.

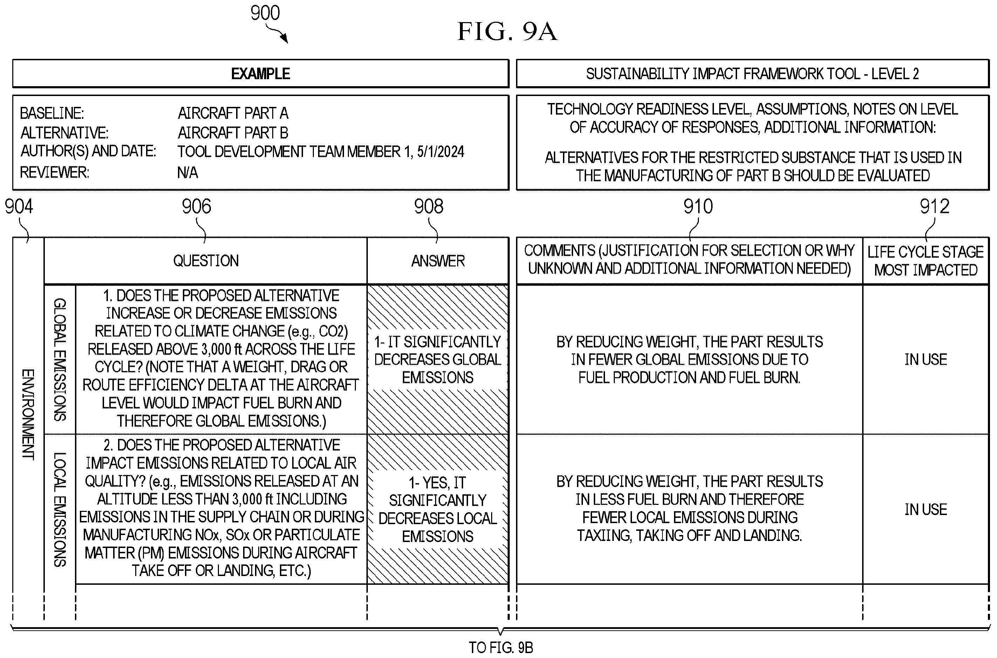

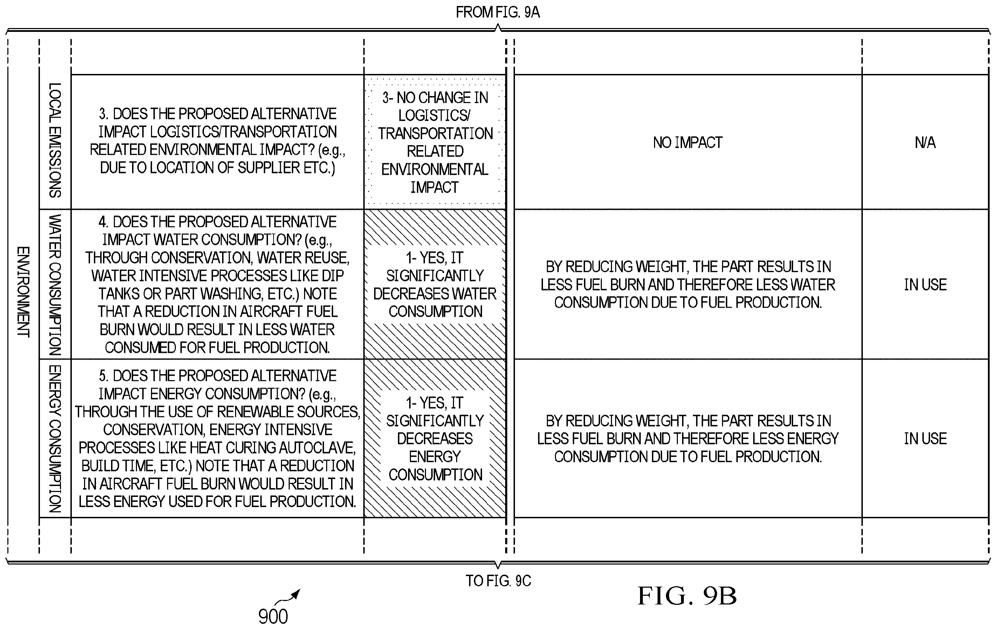

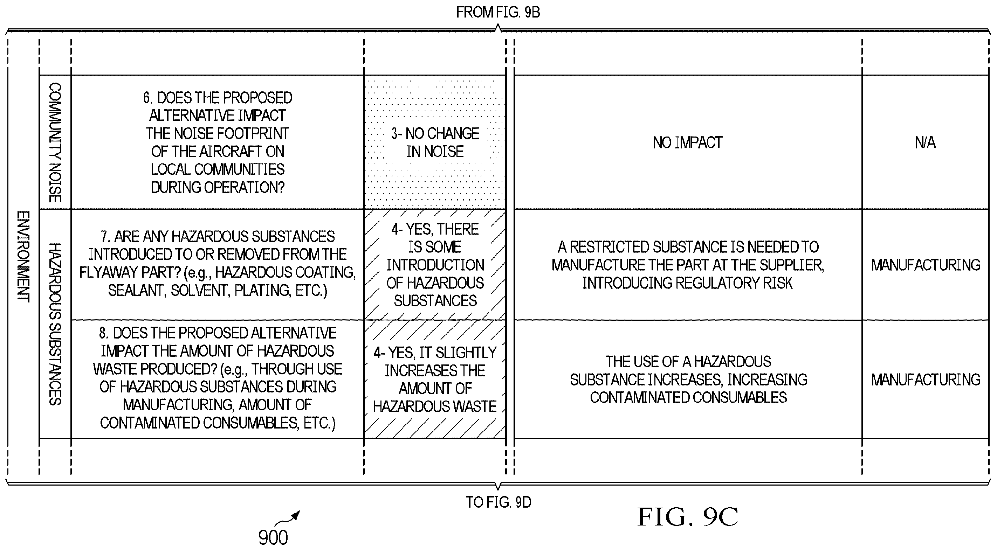

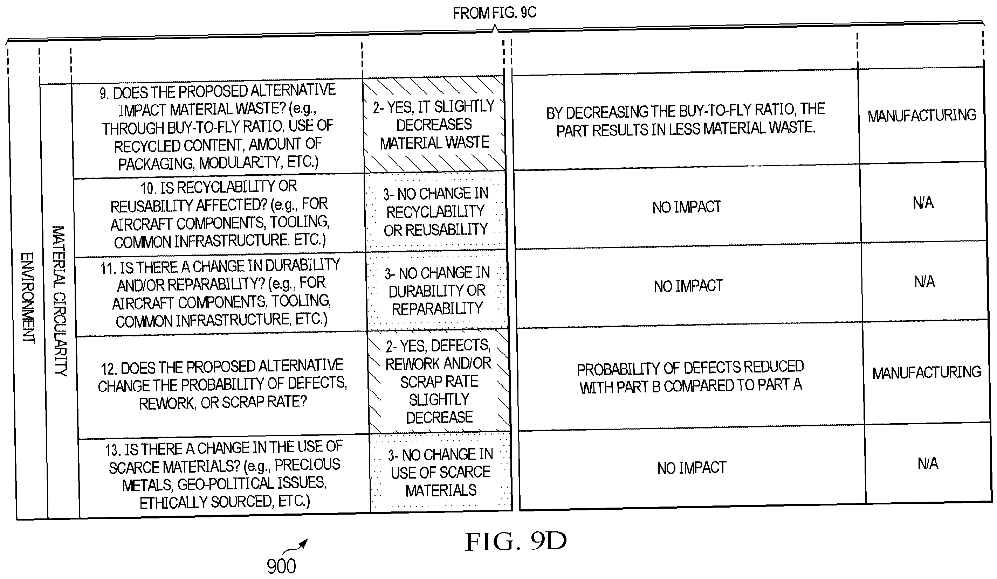

FIGS. 9A, 9B, 9C and 9D illustrate a structured template 900, which has been completed by a user to conduct a second-level sustainability assessment within the environmental sustainability category. In this illustrative example, environmental sustainability category 904 is divided into six subcategories: Global Emissions; Local Emissions; Water Consumption; Energy Consumption; Community Noise; Hazardous Substances; and Material Circularity.

Each subcategory includes pre-defined questions 906 that guide the user through the assessment process. When a user selects a pre-defined question, they are presented with multiple pre-defined answer options 908. This approach streamlines data entry and ensures consistency across assessments.

In this example, the user selected answers for the pre-defined questions and provided detailed explanations for each answer in designated comment fields 910. Additionally, the user specified the most impacted life cycle stage in the life cycle stage field 912, enabling a focused and stage-specific evaluation.

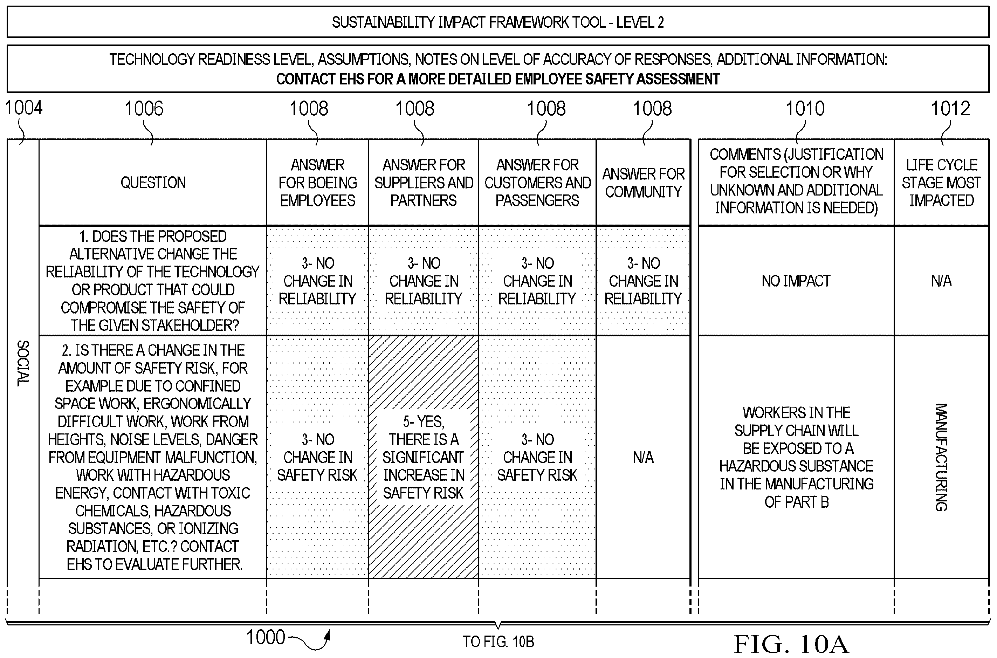

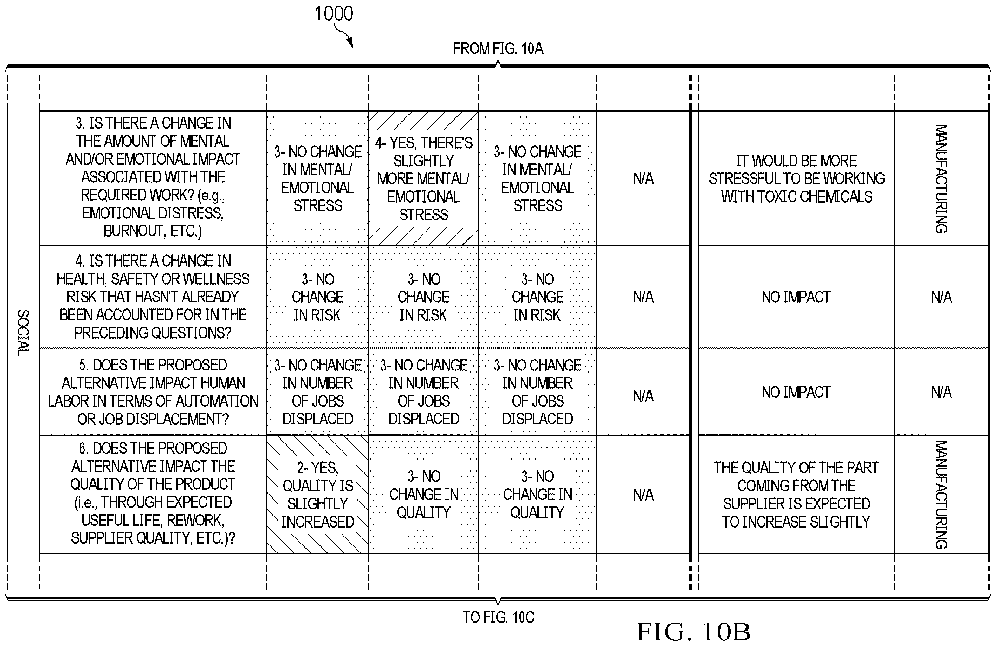

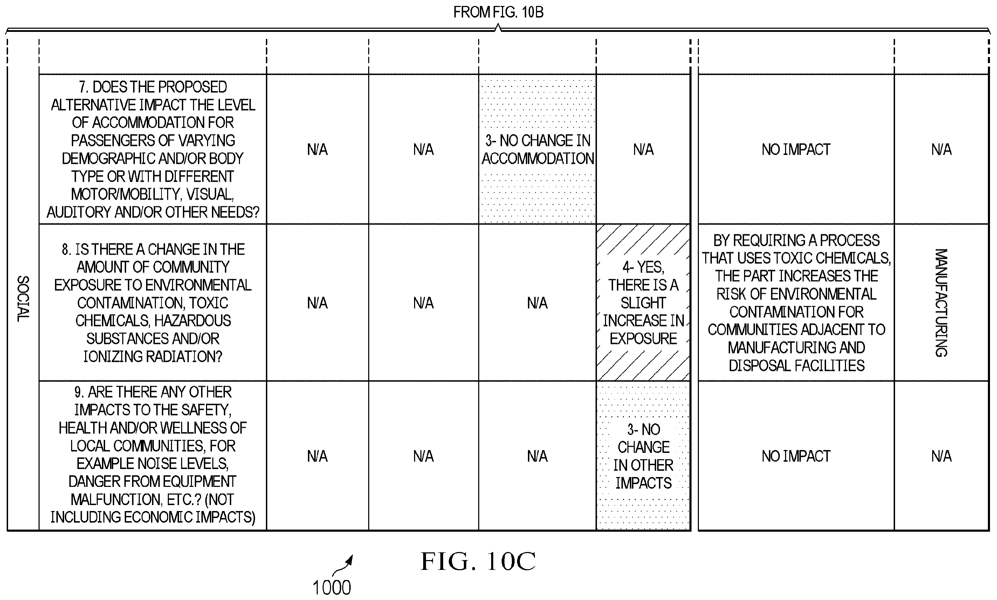

FIGS. 10A, 10B and 10C illustrate structured template 1000, completed by a user to conduct a second-level sustainability assessment within the social sustainability category. In this illustrative example, for each sub-category, pre-defined questions 1006 guide the user through the assessment process. When a user selects a pre-defined question, they are presented with multiple pre-defined answer options 1008. This approach streamlines data entry and ensures consistency across assessments.

In this example, the user selected answers for the pre-defined questions and provided detailed explanations for each answer in designated comment fields 1010. Additionally, the user specified the most impacted life cycle stage in the life cycle stage field 1012, enabling a focused and stage-specific evaluation.

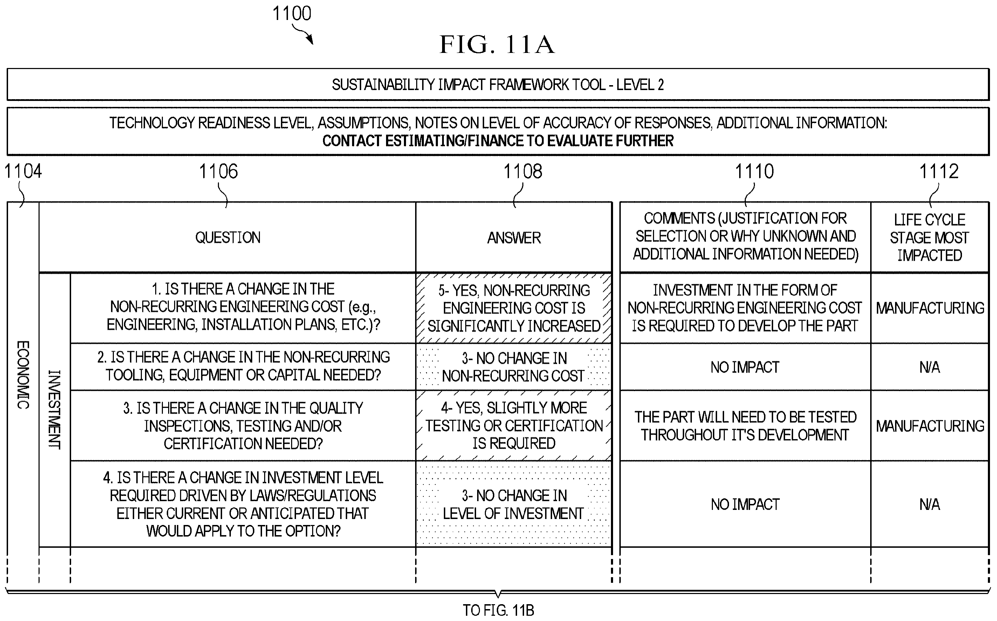

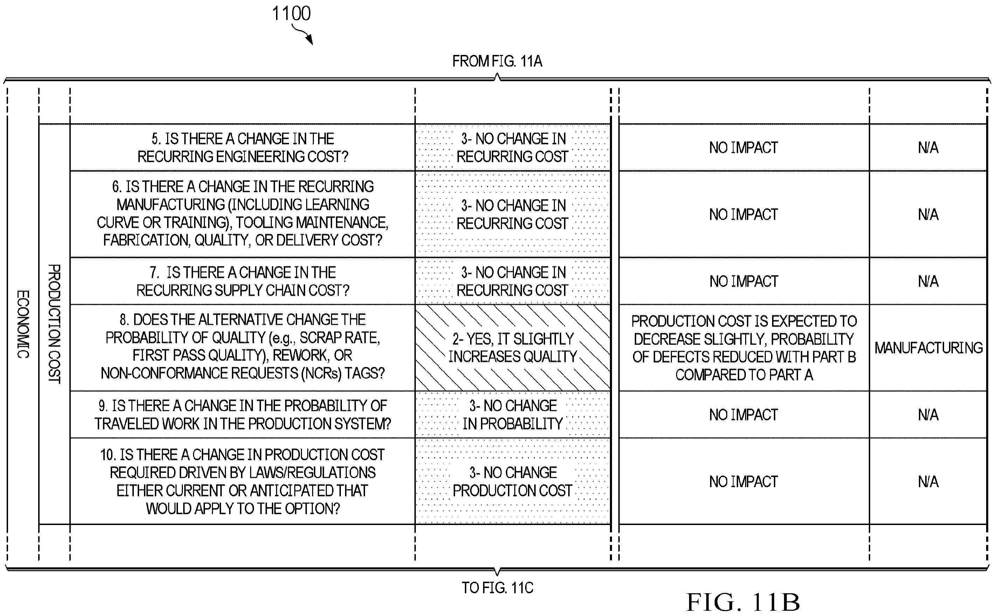

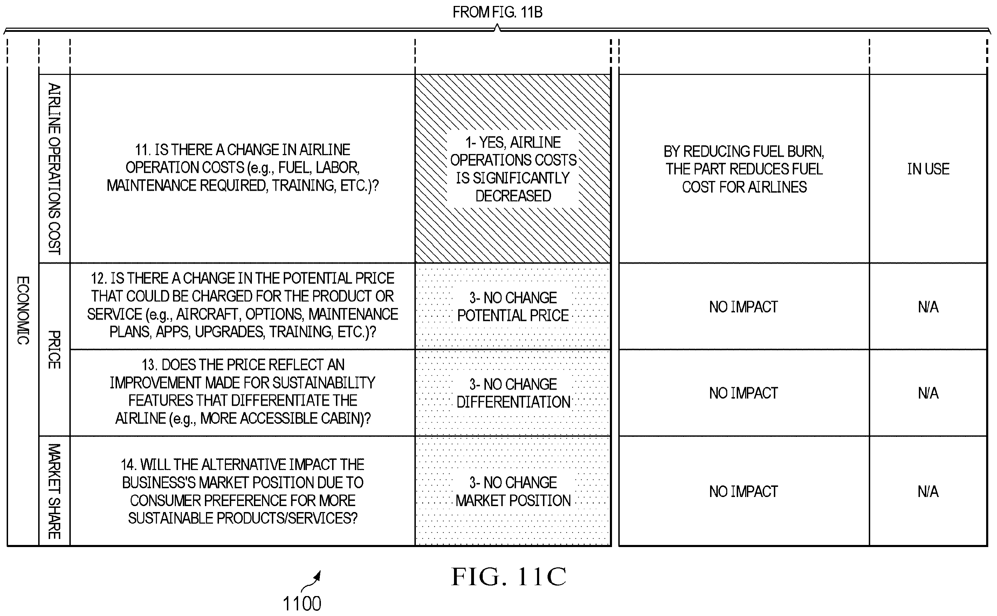

FIGS. 11A, 11B and 11C illustrate structured template 1100, completed by a user to conduct a second-level sustainability assessment within the economic sustainability category. In this illustrative example, for each sub-category, pre-defined questions 1106 guide the user through the assessment process. When a user selects a pre-defined question, they are presented with multiple pre-defined answer options 1108. This approach streamlines data entry and ensures consistency across assessments.

In this example, the user selected answers for the pre-defined questions and provided detailed explanations for each answer in designated comment fields 1110. Additionally, the user specified the most impacted life cycle stage in the life cycle stage field 1112, enabling a focused and stage-specific evaluation.

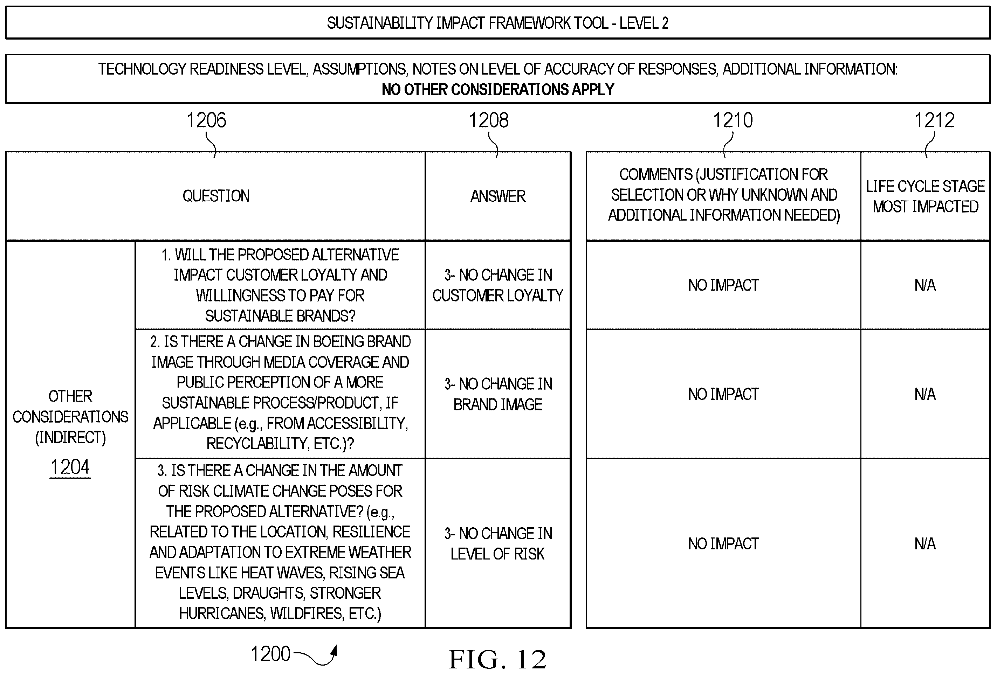

FIG. 12 illustrates structured template 1200, completed by a user to conduct a second-level sustainability assessment within the other sustainability categories. In this illustrative example, pre-defined questions 1206 guide the user through the assessment process. When a user selects a pre-defined question, they are presented with multiple pre-defined answer options 1208. This approach streamlines data entry and ensures consistency across assessments.

In this example, the user selected answers for the pre-defined questions and provided detailed explanations for each answer in designated comment fields 1210. Additionally, the user specified the most impacted life cycle stage in the life cycle stage field 1212.

With reference again to FIG. 2, analysis module 206 integrates user inputs into a comprehensive sustainability framework, serving as the backbone of the assessment process. Analysis module 206 evaluates and processes the input data across various categories and subcategories, enabling the identification of risks, potential benefits, and trade-offs associated with sustainability considerations. By analyzing these elements, analysis module 206 ensures a qualitative approach to sustainability evaluation.

Once the input data is analyzed, visualization module 208 translates the results into actionable insights through comparative visual outputs. These outputs facilitate a comparison between baseline conditions and alternative scenarios by highlighting sustainability-related risks, benefits, and trade-offs. The comparative visual outputs may include charts, graphs, tables, or other graphical representations designed to enhance comprehension and support effective decision-making.

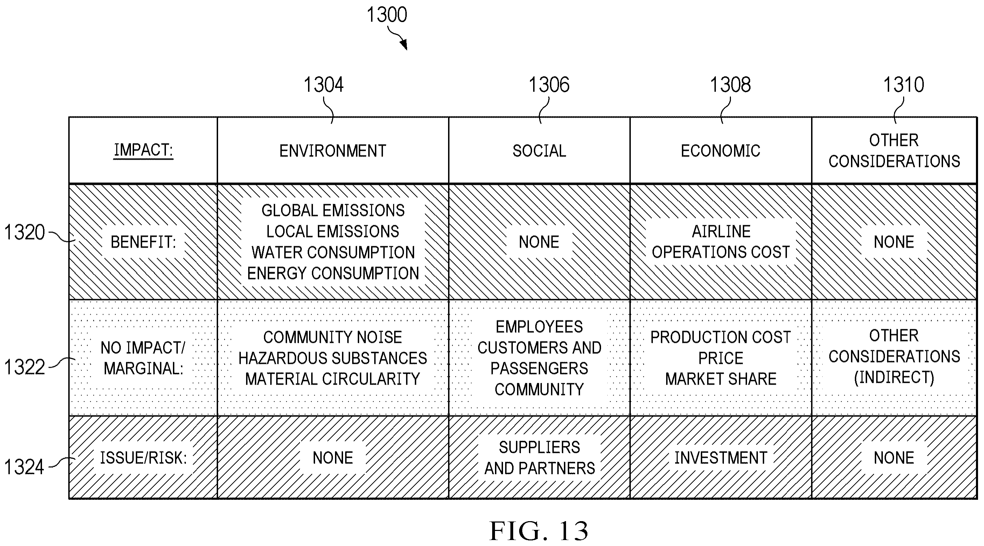

FIG. 13 illustrates table 1300 generated by visualization module 208. Table 1300 organizes data into several key categories: environmental category 1304, social category 1306, economic category 1308, and other considerations or category 1310.

For each category, table 1300 provides an assessment by identifying one of three outcomes:
Benefit 1320 (e.g., sustainability advantages or improvements);
No Impact or Marginal Impact 1322 (e.g., negligible effects or status quo); and
Major Risk or Issue 1324 (e.g., significant challenges or adverse outcomes).

This structured layout allows stakeholders to evaluate the sustainability performance of different options at a glance, ensuring that relevant factors are considered in the decision-making process.

As used herein, a first component "connected to" a second component means that the first component can be connected directly or indirectly to the second component. In other words, additional components may be present between the first component and the second component. The first component is considered to be indirectly connected to the second component when one or more additional components are present between the two components. When the first component is directly connected to the second component, no additional components are present between the two components.

As used herein, the phrase "a number" means one or more. The phrase "at least one of", when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

For example, without limitation, "at least one of item A, item B, or item C" may include item A, item A and item B, or item C. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

The block diagrams in the different depicted embodiments illustrate the architecture, functionality, and operation of some possible implementations of apparatuses and methods in an illustrative embodiment. In this regard, each block in the block diagrams may represent at least one of a module, a segment, a function, or a portion of an operation or step. For example, one or more of the blocks may be implemented as program code.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A computer-implemented method for assessing sustainability impacts of an alternative option, the method comprising:
accessing a sustainability assessment tool (190), wherein the sustainability assessment tool includes pre-defined templates (300, 400, 500) to guide users through structured sustainability questions;
receiving input data (800, 900) for an alternative option related to a plurality of sustainability categories (804, 806, 808);
integrating the input data (800, 900) into a framework comprising a plurality of sustainability sub-categories;
analyzing the input data (206) and identifying relative risks and benefits associated with the alternative option in comparison with a baseline option; and
generating comparative visual outputs (1300) to visually represent the relative sustainability risks and benefits (1320, 1324) of the alternative option.

2. The computer-implemented method of claim 1, wherein the plurality of sustainability categories comprises environmental (804), social (806), and economic (808) sustainability categories and/or
wherein the alternative option comprises new technologies, new manufacturing, new engineering processes, or new planning directives and/or
wherein the baseline option comprises existing technologies, existing manufacturing processes, existing engineering processes or existing planning directives.

3. The computer-implemented method of one of claims 1 - 2, further comprising displaying the comparative visual outputs (1300) using the sustainability assessment tool.

4. The computer-implemented method of one of claims 1 - 3, wherein the comparative visual outputs (1300) include charts and graphs to visually represent the relative sustainability risks and benefits of the alternative option.

5. The computer-implemented method of one of claims 1 - 4, wherein the visual outputs (1300) include stoplight charts or comparative bar graphs to communicate sustainability risks and benefits of the alternative option.

6. The computer-implemented method of one of claims 1 - 5, further comprising linking the sustainability assessment tool (190) with external databases to import data relevant to the environmental, social, and economic categories.

7. A computer system (100) comprising:
a processor set (110);
one or more computer-readable storage media (112, 113); and
program instructions stored on the one or more storage media (112, 113) to cause the processor set (110) to perform operations comprising:
accessing a sustainability assessment tool (190), wherein the sustainability assessment tool includes pre-defined templates (300, 400, 500) to guide users through structured sustainability questions;
receiving input data (800, 900) for an alternative option related to a plurality of sustainability categories;
integrating the input data (800, 900) into a framework comprising a plurality of sustainability sub-categories;
analyzing the input data (206) and identifying relative risks and benefits associated with the alternative option in comparison with a baseline option; and
generating comparative visual outputs (1300) to visually represent the relative sustainability risks and benefits (1320, 1324) of the alternative option.

8. The computer system of claim 7, wherein the plurality of sustainability categories comprises environmental (804), social (806), and economic (808) sustainability categories and/or
wherein the alternative option comprises new technologies, new manufacturing processes, new engineering processes or new planning directives and/or
wherein the baseline option comprises existing technologies, existing manufacturing processes, existing engineering processes or existing planning directives.

9. The computer system of one of claims 7 - 8, wherein the operations further comprise displaying the comparative visual outputs (1300) using the sustainability assessment tool.

10. The computer system of one of claims 7 - 9, wherein the comparative visual outputs (1300) include charts and graphs to visually represent the relative sustainability risks and benefits of the alternative option.

11. A computer program product comprising:
one or more computer-readable storage media (112, 113);
program instructions stored on the one or more storage media to perform operations comprising:
accessing a sustainability assessment tool (190), wherein the sustainability assessment tool includes pre-defined templates (300, 400, 500) to guide users through structured sustainability questions;
receiving input data (800, 900) for an alternative option related to a plurality of sustainability categories;
integrating the input data into a framework comprising a plurality of sustainability sub-categories;
analyzing the input data (206) and identifying relative risks and benefits associated with the alternative option in comparison with a baseline option; and
generating comparative visual outputs (1300) to visually represent the relative sustainability risks and benefits (1320, 1324) of the alternative option.

12. The computer program product of claim 11, wherein the plurality of sustainability categories comprises environmental (804), social (806), and economic (808) sustainability categories and/or
wherein the alternative option comprises new technologies, new manufacturing processes, new engineering or new planning directives and/or
wherein the baseline option comprises existing technologies, existing manufacturing processes, existing engineering processes or existing planning directives.

13. The computer program product of one of claims 11 - 12, wherein the operations further comprise displaying the comparative visual outputs (1300) using the sustainability assessment tool.

14. The computer program product of one of claims 11 - 13, wherein the sustainability assessment tool (190) is linked with external databases to import data relevant to sustainability categories.
